# EUROPEAN PATENT SPECIFICATION

(11) **EP 4 447 733 B1**
(45) Date of publication and mention of the grant of the patent: **04.02.2026**
(21) Application number: 22835642.4
(22) Date of filing: 12.12.2022
(51) Int. Cl.: A24F 40/57

(54) **AEROSOL-GENERATING DEVICE HAVING TEMPERATURE-BASED CONTROL**
AEROSOLERZEUGUNGSVORRICHTUNG MIT TEMPERATURBASIERTER STEUERUNG
DISPOSITIF DE GÉNÉRATION D'AÉROSOL AYANT UNE COMMANDE BASÉE SUR LA TEMPÉRATURE

(30) Priority: 15.12.2021 EP 21214681
(43) Date of publication of application: 23.10.2024
(73) Proprietor: Philip Morris Products S.A., 2000 Neuchâtel (CH)
(72) Inventor: APETREI BIRZA, Cristina, 2000 Neuchâtel (CH); BOLOGNA, Matteo, 2000 Neuchâtel (CH); COLOTTE, Guillaume, 2000 Neuchâtel (CH); DUCROS, Maxime Georges, 2000 Neuchâtel (CH); ISCHI, Grégori, 2000 Neuchâtel (CH); MARIACHER, Eric, 2000 Neuchâtel (CH); STANKOVIKJ, Filip, 2000 Neuchâtel (CH); STEFFEN, Fabrice, 2000 Neuchâtel (CH); UTHURRY, Jerome, 2000 Neuchâtel (CH)
(74) Representative: Abitz & Partner
(86) International application number: PCT/EP2022/085293
(87) International publication number: WO 2023/110705

(56) References cited:
- WO-A1-2019/129843
- US-A1- 2021 235 770
- US-A1- 2021 251 299

## Description

The present invention relates to an aerosol-generating device having a controller arranged to control a supply of power to an electrical heater based on the determined temperature of the electrical heater. The present invention also relates to an aerosol-generating system comprising the aerosol-generating device. The present invention also relates to a method of controlling an aerosol-generating device.

One type of aerosol-generating system is an electrically operated aerosol-generating system. Known handheld electrically operated aerosol-generating systems typically comprise an aerosol-generating device comprising a battery, control electronics and an electric heater for heating an aerosol-generating article designed specifically for use with the aerosol-generating device. The aerosol-generating article comprises an aerosol-forming substrate. In some examples, the aerosol-forming substrate is in the form of a plug, such as a tobacco plug, and the electric heater contained within the aerosol-generating device is inserted into the aerosol-forming substrate when the smoking article is inserted into the aerosol-generating device.

Typically, the aerosol-generating device is configured to generate heat using the electric heater according to a predetermined heating profile. However, variations in the aerosol-forming substrate may result in undesirable variations in a user experience. For example, in high humidity environments, the aerosol-forming substrate may exhibit a high water content. Since water is aerosolised at typical operating temperatures for aerosol-generating devices, a high water content may result in an undesirably high perceived aerosol temperature by a user.

A high water content may also result in a lower rate of increase in temperature upon start of the user experience. Thus, this rate of increase in temperature may be used to determine whether the aerosol-forming substrate has a normal or a high water content. The controller is arranged to adjust the supply of power from the power supply to the electrical heater based on the determined rate of increase in temperature.

It has been observed that during normal use of an aerosol-generating device there occur situations in which the determination of rate of increase in temperature alone may not be sufficient to draw reliable conclusions regarding the water content of the aerosol-forming substrate.

Aerosol-generating devices may provide users with two or more user experiences, without intermediate recharge of the on-board power supply. It has been recognized that aerosol-generating devices, which allow for a plurality of user experiences, may lead to new challenges in allowing a consistent aerosol-formation throughout a full operation cycle.

It would be desirable to provide an aerosol-generating device that mitigates or overcomes at least some of the disadvantages with known aerosol-generating devices.

It would be desirable to provide an aerosol-generating device that allows to draw more reliable conclusions as to the water content of the aerosol-forming substrate such that the appropriate heating profile can be selected.

It would further be desirable to provide an aerosol-generating device that allows to select the appropriate heating profile in particular for aerosol-generating devices that provide multiple user experiences without the need for intermediate recharging. Document US-2021 235 770 discloses an aerosol-generating device comprising: a cavity for receiving an aerosol-forming substrate; an electrical heater arranged to heat an aerosol-forming substrate when the aerosol-forming substrate is received within the cavity; a power supply; and a controller arranged to control a supply of power from the power supply to the electrical heater during a first time period and a second time period after the first time period, wherein the controller is arranged to determine a rate of increase in temperature of the electrical heater during the first time period by determining a time taken for a temperature of the electrical heater to increase from a first predetermined temperature to a second predetermined temperature during the first time period, and wherein the controller is arranged to adjust the supply of power from the power supply to the electrical heater during the second time period based on the determined rate of increase in temperature of the electric heater during the first time period.

According to an embodiment of the present invention there is provided an aerosol-generating device comprising a cavity for receiving an aerosol-forming substrate, an electrical heater arranged to heat an aerosol-forming substrate when the aerosol-forming substrate is received within the cavity. The aerosol-generating device also comprises a power supply, and a controller arranged to control a supply of power from the power supply to the electrical heater during a first time period and a second time period after the first time period.

The controller is arranged to determine a rate of increase in temperature of the electrical heater during the first time period by determining a time taken for a temperature of the electrical heater to increase from a first predetermined temperature to a second predetermined temperature during the first time period.

The controller is arranged to determine an initial temperature of the electrical heater.

The controller is further arranged to adjust the supply of power from the power supply to the electrical heater during the second time period based on the initial temperature of the electrical heater and based on the determined rate of increase in temperature of the electric heater during the first time period.

Advantageously, the determined rate of increase in temperature may be indicative of a water content of an aerosol-forming substrate received within the cavity. A relatively low determined rate of increase in temperature may be indicative of a relatively high water content. A relatively high determined rate of increase in temperature may be indicative of a relatively low water content. Advantageously, based on the determined rate of increase in temperature, the controller varies a supply of power to the electrical heater during a subsequent second time period to adjust further heating of the electrical heater.

Preferably, the first time period is sufficiently long to ensure a measurable increase in the temperature of the electrical heater across a range of water contents for the aerosol-forming substrate. Preferably, the first time period is at least about 1 second, more preferably at least about 2 seconds, more preferably at least about 3 seconds.

Preferably, the first time period is sufficiently short to minimise the time before the controller varies the supply of power to the electrical heater during the second time period to provide a desired user experience. Preferably, the first time period is less than about 15 seconds, more preferably less than about 14 seconds, more preferably less than about 13 seconds, more preferably less than about 12 seconds, more preferably less than about 11 seconds, more preferably less than about 10 seconds.

The controller may be arranged to determine a rate of increase in temperature of the electrical heater by determining the time taken for a predetermined increase in temperature of the electrical heater to occur. The controller may be arranged to determine a rate of increase in temperature of the electrical heater during a portion of the first time period. The controller may be arranged to determine a time taken for a temperature of the electrical heater to increase from a first predetermined temperature to a second predetermined temperature during the first time period, wherein the determined time is the determined rate of increase in temperature.

Preferably, the first predetermined temperature is above any anticipated ambient temperature. Advantageously, a first predetermined temperature above ambient temperature may minimise or eliminate any variation in ambient temperature on the determined rate of increase in temperature of the electrical heater. Preferably, the first predetermined temperature is at least about 50 degrees Celsius, preferably at least about 60 degrees Celsius, preferably at least about 70 degrees Celsius, preferably at least about 80 degrees Celsius, preferably at least about 90 degrees Celsius. The first predetermined temperature may be 100 degrees Celsius.

It is understood that numerical values specified herein encompass a range of values around the specified value based on variations resulting from manufacturing tolerances and accuracy of measuring instruments.

Preferably, the second predetermined temperature is below a target operating temperature of the electrical heater during the second period of time. Advantageously, a second predetermined temperature below a target operating temperature may facilitate determination of the rate of increase in temperature of the electrical heater before the controller is required to begin adjusting the supply of power to the electrical heater during the second time period. Preferably, the second predetermined temperature is less than about 300 degrees Celsius, preferably less than about 290 degrees Celsius, preferably less than about 280 degrees Celsius, preferably less than about 270 degrees Celsius, preferably less than about 260 degrees Celsius. The second predetermined temperature may be 250 degrees Celsius.

Preferably, the controller is arranged to supply power from the power supply to the electrical heater at a constant rate for the first time period. Advantageously, supplying power to the electrical heater at a constant rate for the first time period may facilitate an accurate determination of the rate of increase in temperature of the electrical heater during the first time period. The controller may be arranged to supply power from the power supply to the electrical heater at a duty cycle of at least about 85 percent during the first time period. The controller may be arranged to supply power from the power supply to the electrical heater at a duty cycle of at least about 90 percent during the first time period. The controller may be arranged to supply power from the power supply to the electrical heater at a duty cycle of at least about 95 percent during the first time period.

Preferably, the controller is arranged to supply power from the power supply to the electrical heater according to a first heating profile or to a second heating profile during the second time period based on a comparison of the determined rate of increase in temperature with a first threshold, wherein with the second heating profile more power is supplied than with the first heating profile. The first heating profile may be described as a reduced heating profile or as a wet heating profile. The second heating profile may be described as a standard heating profile. The first threshold may be indicative of a threshold between a normal water content of the aerosol-forming substrate and a high water content of the aerosol-forming substrate. In other words, a determined rate of increase in temperature below the first threshold may be indicative of a high water content of the aerosol-forming substrate. A determined rate of increase in temperature above the first threshold may be indicative of a normal water content of the aerosol-forming substrate.

The two heating profiles may differ with respect to the total electrical power delivered during an experience. The two heating profiles may differ with respect to the duty cycle or the duty cycles applied during an experience.

In embodiments in which the controller determines a rate of increase in temperature of the electrical heater by determining the time taken for a predetermined increase in temperature of the electrical heater to occur, the first threshold may be a time threshold. The controller is arranged to supply power to the electrical heater according to a first heating profile when the determined time is above the first threshold. The controller is arranged to supply power to the electrical heater according to a second heating profile when the determined time is below the first threshold. The first threshold may be a time of between about 3 seconds and about 10 seconds. The first threshold may be a time of between about 5 seconds and about 7 seconds, more preferably a time between 5.5 and 6.5 seconds. The first threshold may be a time of 5.7 seconds or alternatively a time of 6.1 seconds. The time of the first threshold may depend upon the design of the electric heater.

Preferably, the controller is arranged to prevent the supply of power from the power supply to the electrical heater based on a comparison of the determined rate of increase in temperature with a second threshold, wherein the second threshold is different to the first threshold. The second threshold may be indicative of a threshold between a normal water content of the aerosol-forming substrate and a low water content of the aerosol-forming substrate. In other words, a determined rate of increase in temperature below the second threshold may be indicative of a normal water content of the aerosol-forming substrate. A determined rate of increase in temperature above the second threshold may be indicative of a low water content of the aerosol-forming substrate.

The controller may be arranged to supply power to the electrical heater according to the second heating profile when the determined time is below the first threshold and above the second threshold. The controller is arranged to prevent the supply of power to the electrical heater when the determined time is below the second threshold. The second threshold may be a time of between about 4 seconds and about 5 seconds.

Preferably, the controller is arranged to determine an ambient temperature.

Preferably, the controller is arranged to supply power from the power supply to the electrical heater according to the second heating profile when the determined ambient temperature is below the ambient temperature threshold.

The present inventors have recognised that the rate of increase in temperature of an aerosol-forming substrate having a normal water content may be significantly slower when the ambient temperature is low. In other words, in a cold environment, the determined rate of increase in temperature of the electrical heater when used with an aerosol-forming substrate having a normal water content may be similar to the determined rate of increase in temperature of the electrical heater when used with an aerosol-forming substrate having a high water content at a normal ambient temperature. Therefore, advantageously, supplying power to the electrical heater according to the first heating profile during the second time period only when the ambient temperature is above an ambient temperature threshold may reduce or prevent the controller supplying energy according to the first heating profile when using the aerosol-generating device with an aerosol-forming substrate having a normal water content at a low ambient temperature. The present inventors have recognised that, when the ambient temperature is low, it is not necessary to supply power to the electrical heater according to the first heating profile for aerosol-forming substrate having a high water content. In particular, advantageously, the cool ambient air entering the aerosol-generating device during use is sufficient to maintain the temperature of the generated aerosol at a level acceptable to a user, even when the aerosol-forming substrate has a high water content. Preferably, the ambient temperature threshold is between about 15 degrees Celsius and about 25 degrees Celsius, preferably between about 17 degrees Celsius and about 23 degrees Celsius. The ambient temperature threshold may be 18 degrees Celsius.

The aerosol-generating device may comprise a temperature sensor arranged to sense the ambient temperature, wherein the controller is arranged to determine the ambient temperature based on a signal received from the temperature sensor. The temperature sensor may comprise a thermistor. The temperature sensor may comprise a thermocouple. The temperature sensor may comprise a semiconductor temperature sensor.

The controller is arranged to determine an initial temperature of the electrical heater. The controller is arranged to adjust the supply of power from the power supply to the electrical heater during the second time period based on the initial temperature of the electrical heater and based on the determined rate of increase in temperature of the electric heater during the first time period.

The controller may be arranged to supply power from the power supply to the electrical heater according to a first or a second heating profile during the second time period, based on the initial temperature of the electrical heater and based on the determined rate of increase in temperature of the electric heater during the first time period.

The controller may comprise an electrical storage element. The controller may be arranged to communicate with the electrical storage element. The controller may be arranged to write to and read from the electrical storage element parameters or other information pertaining to the control of the aerosol-generating device. The controller may be arranged to store the lastly used heating profile in the electrical storage element. The electrical storage element may be a memory element.

The controller may be arranged to determine the initial temperature of the electrical heater and may be further arranged to supply power from the power supply to the electrical heater according to the lastly used heating profile, if the initial temperature of the electrical heater is above a predefined temperature threshold. For this purpose the lastly used heating profile may be stored in the electrical storage element.

The predefined temperature threshold for the initial temperature of the electrical heater may be between about 50 degrees Celsius and about 150 degrees Celsius, between about 60 degrees Celsius and about 120 degrees Celsius or preferably between about 80 degrees Celsius and about 100 degrees Celsius. The predefined temperature threshold for the initial temperature of the electrical heater may be 80 degrees Celsius.

If the initial temperature of the electrical heater is increased, the required time taken for a temperature of the electrical heater to increase the second predetermined temperature during the first time period may be significantly reduced. Thus, in such cases even an aerosol-generating article comprising an aerosol-forming substrate with a rather high water content may be heated very fast and may be erroneously heated with the normal second heating profile.

In order to avoid such situations, the determination of the rate of increase in temperature is by-passed and the controller is arranged to supply power from the power supply to the electrical heater according to the lastly used heating profile. Such control strategy is justified, since it may be assumed that the aerosol-generating device has been used most recently and is now to be used for a subsequent second experience. Due to the close temporal relation to the first or previous experience, it is further highly likely that the ambient conditions and also the conditions of the aerosol-forming substrate are identical to those of the previous experience.

In embodiments the aerosol-generating device may comprise a rechargeable power supply capable of providing at least a first experience and a second experience without intermediate recharge between the first and the second experiences. In these embodiments, the controller may be arranged to determine whether the instant experience is a first experience or a second experience. The controller may be further arranged to adjust the supply of power from the power supply to the electrical heater during the second time period based on if it is a first or a second experience.

The controller may be arranged to store in the electrical storage element, whether the current experience is a first experience or a second experience. The controller may be further arranged to store the lastly used heating profile.

If the controller detects that an experience is a second experience, the controller may be arranged to supply power from the power supply to the electrical heater according to the heating profile used in the preceding first experience.

It has been surprisingly noticed that if there is an extended time gap between two successive experiences, without intermediate re-charge of the rechargeable power supply, the determined rate of increase in temperature of the electrical heater during the first time period may vary. In more detail, it has been noticed that for a second experience the time taken for a temperature of the electrical heater to increase from a first predetermined temperature to a second predetermined temperature during the first time period is increased. While the reason for such increase is not yet sufficiently clarified, it is believed that most likely the reason has to be found in the battery chemistry. Evidently, with a long waiting time after the first experience the battery may no longer be capable of providing a power boost such as to raise the temperature as fast as in a first experience or in a second experience performed shortly after a first experience.

In order to avoid application of a wrong heating profile, a second experience may always be carried out using the heating profile used in the first experience. It will be understood that the risk of such approach is that if a consumable with a higher water content were inserted after a previous experience with a "dry" consumable (using the normal heating profile), then the "wet" consumable will be heated with the normal heating profile, which might cause a hot aerosol effect for the user. However, this it is considered that this is a rather unlikely scenario. Instead usually a consumable used for a second experience following a first experience will likely have the same characteristics of the consumable used in the previous experience: it will most likely come from the same pack of consumables and be subject to the same climatic conditions.

The controller may be further arranged to be reset to first experience after a full recharge of the power supply of the aerosol-generating device. In this way it is ensured that it is considered a first experience, when a fully charged battery is available.

To facilitate determining the rate of increase in temperature of the electrical heater, preferably the controller is arranged to determine a temperature of the electrical heater. Preferably, the electrical heater comprises at least one resistive heating element, wherein the controller is arranged to determine a temperature of the at least one resistive heating element based on a resistance of the at least one resistive heating element. The controller may comprise a circuit arranged to measure a resistance of the at least one resistive heating element. The controller may be arranged to determine a temperature of the at least one resistive heating element by comparing the measured resistance to a calibrated curve of resistance against temperature.

Preferably, the electrical heater comprises a plurality of resistive heating elements. Preferably, the resistive heating elements are electrically connected in a parallel arrangement. Advantageously, providing a plurality of resistive heating element electrically connected in a parallel arrangement may facilitate the delivery of a desired electrical power to the electrical heater while reducing or minimising the voltage required to provide the desired electrical power. Advantageously, reducing or minimising the voltage required to operate the electrical heater may facilitate reducing or minimising the physical size of the power supply.

The electrical heater may comprise an electrically insulating substrate, wherein the at least one resistive heating element is provided on the electrically insulating substrate.

Preferably, the electrically insulating substrate is stable at an operating temperature of the electrical heater. Preferably, the electrically insulating substrate is stable at temperatures of up to about 400 degrees Celsius, more preferably about 500 degrees Celsius, more preferably about 600 degrees Celsius, more preferably about 700 degrees Celsius, more preferably about 800 degrees Celsius. The operating temperature of the electrical heater during use may be at least about 200 degrees Celsius. The operating temperature of the electrical heater during use may be less than about 700 degrees Celsius. The operating temperature of the electrical heater during use may be less than about 600 degrees Celsius. The operating temperature of the electrical heater during use may be less than about 500 degrees Celsius. The operating temperature of the electrical heater during use may be less than about 400 degrees Celsius.

The electrically insulating substrate may be a ceramic material such as Zirconia or Alumina. Preferably, the electrically insulating substrate has a thermal conductivity of less than or equal to about 2 Watts per metre Kelvin.

Suitable materials for forming the at least one resistive heating element include but are not limited to: semiconductors such as doped ceramics, electrically "conductive" ceramics (such as, for example, molybdenum disilicide), carbon, graphite, metals, metal alloys and composite materials made of a ceramic material and a metallic material. Such composite materials may comprise doped or undoped ceramics. Examples of suitable doped ceramics include doped silicon carbides. Examples of suitable metals include titanium, zirconium, tantalum and metals from the platinum group. Examples of suitable metal alloys include stainless steel, nickel-, cobalt-, chromium-, aluminium- titanium- zirconium-, hafnium-, niobium-, molybdenum-, tantalum-, tungsten-, tin-, gallium-, manganese- and iron-containing alloys, and super-alloys based on nickel, iron, cobalt, stainless steel, Timetai^{®} and iron-manganese-aluminium based alloys.

In some embodiments, the at least one resistive heating element comprises one or more stamped portions of electrically resistive material, such as stainless steel. Alternatively, the at least one resistive heating element may comprise a heating wire or filament, for example a Ni-Cr (Nickel-Chromium), platinum, tungsten or alloy wire.

The electrical heater may be arranged for insertion into an aerosol-forming substrate when the aerosol-forming substrate is received within the cavity. The electrical heater may be positioned within the cavity. The electrical heater may be an elongate electrical heater. The elongate electrical heater may be blade-shaped. The elongate electrical heater may be pinshaped. The elongate electrical heater may be cone-shaped. The elongate electrical heater may be blade-shaped.

The power supply may be a DC voltage source. In preferred embodiments, the power supply is a battery. For example, the power supply may be a nickel-metal hydride battery, a nickel cadmium battery, or a lithium based battery, for example a lithium-cobalt, a lithium-iron-phosphate or a lithium-polymer battery. The power supply may alternatively be another form of charge storage device such as a capacitor. The power supply may require recharging and may have a capacity that allows for the storage of enough energy for use of the aerosol-generating device with one or more aerosol-forming substrates.

Preferably, the aerosol-generating device comprises a housing. Preferably, the housing at least partially defines the cavity for receiving an aerosol-forming substrate.

Preferably, the aerosol-generating device comprises at least one air inlet in fluid communication with the cavity. In embodiments in which the aerosol-generating device comprises a housing, preferably the housing at least partially defines the at least one air inlet. Preferably, the at least one air inlet is in fluid communication with an upstream end of the cavity. **In** embodiments in which the electrical heater is an elongate electrical heater positioned within the cavity, preferably the elongate electrical heater extends into the cavity from the upstream end of the cavity.

The aerosol-generating device may comprise a sensor to detect air flow indicative of a consumer taking a puff. The air flow sensor may be an electro-mechanical device. The air flow sensor may be any of: a mechanical device, an optical device, an opto-mechanical device and a micro electro-mechanical systems (MEMS) based sensor. The aerosol-generating device may comprise a manually operable switch for a consumer to initiate a puff.

Preferably, the aerosol-generating device comprises an indicator for indicating when the electrical heater is activated. The indicator may comprise a light, activated when the electrical heater is activated.

The aerosol-generating device may comprise at least one of an external plug or socket and at least one external electrical contact allowing the aerosol-generating device to be connected to another electrical device. For example, the aerosol-generating device may comprise a USB plug or a USB socket to allow connection of the aerosol-generating device to another USB enabled device. For example, the USB plug or socket may allow connection of the aerosol-generating device to a USB charging device to charge a rechargeable power supply within the aerosol-generating device. The USB plug or socket may additionally, or alternatively, support the transfer of data to or from, or both to and from, the aerosol-generating device. Additionally, or alternatively, the aerosol-generating device may be connected to a computer to transfer data to the device, such as new heating profiles for new aerosol-generating articles.

In those embodiments in which the aerosol-generating device comprises a USB plug or socket, the aerosol-generating device may further comprise a removable cover that covers the USB plug or socket when not in use. In embodiments in which the USB plug or socket is a USB plug, the USB plug may additionally or alternatively be selectively retractable within the device.

According to an embodiment of the present invention there is provided an aerosol-generating system comprising an aerosol-generating device according to the present invention, in accordance with any of the embodiments described herein, and an aerosol-generating article comprising an aerosol-forming substrate.

As used herein, the term "aerosol-generating article" refers to an article comprising an aerosol-forming substrate that, when heated, releases volatile compounds that can form an aerosol.

The aerosol-forming substrate may comprise tobacco.

The aerosol-forming substrate may comprise a plug of tobacco. The tobacco plug may comprise one or more of: powder, granules, pellets, shreds, spaghettis, strips or sheets containing one or more of: tobacco leaf, fragments of tobacco ribs, reconstituted tobacco, homogenised tobacco, extruded tobacco and expanded tobacco. Optionally, the tobacco plug may contain additional tobacco or non-tobacco volatile flavour compounds, to be released upon heating of the tobacco plug. Optionally, the tobacco plug may also contain capsules that, for example, include the additional tobacco or non-tobacco volatile flavour compounds. Such capsules may melt during heating of the tobacco plug. Alternatively, or in addition, such capsules may be crushed prior to, during, or after heating of the tobacco plug.

Where the tobacco plug comprises homogenised tobacco material, the homogenised tobacco material may be formed by agglomerating particulate tobacco. The homogenised tobacco material may be in the form of a sheet. The homogenised tobacco material may have an aerosol-former content of greater than 5 percent on a dry weight basis. The homogenised tobacco material may alternatively have an aerosol former content of between 5 percent and 30 percent by weight on a dry weight basis. Sheets of homogenised tobacco material may be formed by agglomerating particulate tobacco obtained by grinding or otherwise comminuting one or both of tobacco leaf lamina and tobacco leaf stems; alternatively, or in addition, sheets of homogenised tobacco material may comprise one or more of tobacco dust, tobacco fines and other particulate tobacco by-products formed during, for example, the treating, handling and shipping of tobacco. Sheets of homogenised tobacco material may comprise one or more intrinsic binders, that is tobacco endogenous binders, one or more extrinsic binders, that is tobacco exogenous binders, or a combination thereof to help agglomerate the particulate tobacco. Alternatively, or in addition, sheets of homogenised tobacco material may comprise other additives including, but not limited to, tobacco and non-tobacco fibres, aerosol-formers, humectants, plasticisers, flavourants, fillers, aqueous and non-aqueous solvents and combinations thereof. Sheets of homogenised tobacco material are preferably formed by a casting process of the type generally comprising casting a slurry comprising particulate tobacco and one or more binders onto a conveyor belt or other support surface, drying the cast slurry to form a sheet of homogenised tobacco material and removing the sheet of homogenised tobacco material from the support surface.

The aerosol-generating article may have a total length of between approximately 30 millimetres and approximately 100 millimetres. The aerosol-generating article may have an external diameter of between approximately 5 millimetres and approximately 13 millimetres.

The aerosol-generating article may comprise a mouthpiece positioned downstream of the tobacco plug. The mouthpiece may be located at a downstream end of the aerosol-generating article. The mouthpiece may be a cellulose acetate filter plug. Preferably, the mouthpiece is approximately 7 millimetres in length, but can have a length of between approximately 5 millimetres to approximately 10 millimetres.

The tobacco plug may have a length of approximately 10 millimetres. The tobacco plug may have a length of approximately 12 millimetres.

The diameter of the tobacco plug may be between approximately 5 millimetres and approximately 12 millimetres.

In a preferred embodiment, the aerosol-generating article has a total length of between approximately 40 millimetres and approximately 50 millimetres. Preferably, the aerosol-generating article has a total length of approximately 45 millimetres. Preferably, the aerosol-generating article has an external diameter of approximately 7.2 millimetres.

According to an embodiment of the present invention, there is provided a method of controlling an aerosol-generating device having a cavity for receiving an aerosol-forming substrate, a power supply, and an electrical heater arranged to heat an aerosol-forming substrate when the aerosol-forming substrate is received within the cavity. The method comprises a step of controlling a supply of power from the power supply to the electrical heater for a first time period. The method also comprises a step of determining an initial temperature of the electrical heater and a step of determining a rate of increase in temperature of the electrical heater during the first time period. The method also comprises a step of adjusting a supply of power from the power supply to the electrical heater during a second time period after the first time period, wherein the supply of power from the power supply to the electrical heater during the second time period is adjusted based on the determined initial temperature of the electrical heater based on the determined rate of increase in temperature during the first time period.

As described herein with respect to embodiments of the present invention, the determined rate of increase in temperature of the electrical heater may be indicative of a water content of the aerosol-forming substrate. A relatively low determined rate of increase in temperature may be indicative of a relatively high water content. A relatively high determined rate of increase in temperature may be indicative of a relatively low water content. Advantageously, based on the determined rate of increase in temperature, a supply of power to the electrical heater during a subsequent second time period may be adjusted to adjust further heating of the electrical heater.

Preferably, the first time period is sufficiently long to ensure a measurable increase in the temperature of the electrical heater across a range of water contents for the aerosol-forming substrate. Preferably, the first time period is at least about 1 second, more preferably at least about 2 seconds, more preferably at least about 3 seconds.

Preferably, the first time period is sufficiently short to minimise the time before adjusting the supply of power to the electrical heater during the second time period to provide a desired user experience. Preferably, the first time period is less than about 15 seconds, more preferably less than about 14 seconds, more preferably less than about 13 seconds, more preferably less than about 12 seconds, more preferably less than about 11 seconds, more preferably less than about 10 seconds.

The step of determining a rate of increase in temperature of the electrical heater may comprise determining the time taken for a predetermined increase in temperature of the electrical heater to occur. The step of determining a rate of increase in temperature of the electrical heater may comprise determining a rate of increase in temperature of the electrical heater during a portion of the first time period. The step of determining a rate of increase in temperature of the electrical heater may comprise determining a time taken for a temperature of the electrical heater to increase from a first predetermined temperature to a second predetermined temperature during the first time period, wherein the determined time is the determined rate of increase in temperature.

Preferably, the first predetermined temperature is above any anticipated ambient temperature. Advantageously, a first predetermined temperature above ambient temperature may minimise or eliminate any variation in ambient temperature on the determined rate of increase in temperature of the electrical heater. Preferably, the first predetermined temperature is at least about 50 degrees Celsius, preferably at least about 60 degrees Celsius, preferably at least about 70 degrees Celsius, preferably at least about 80 degrees Celsius, preferably at least about 90 degrees Celsius. The first predetermined temperature may be about 100 degrees Celsius.

Preferably, the second predetermined temperature is below a target operating temperature of the electrical heater during the second period of time. Advantageously, a second predetermined temperature below a target operating temperature may facilitate determination of the rate of increase in temperature of the electrical heater before adjusting the supply of power to the electrical heater during the second time period. Preferably, the second predetermined temperature is less than about 300 degrees Celsius, preferably less than about 290 degrees Celsius, preferably less than about 280 degrees Celsius, preferably less than about 270 degrees Celsius, preferably less than about 260 degrees Celsius. The second predetermined temperature may be about 250 degrees Celsius.

In a step of the method of the present invention an initial temperature of the electrical heater is determined. The supply of power from the power supply to the electrical heater during the second time period is adjusted based on the initial temperature of the electrical heater and based on the determined rate of increase in temperature of the electric heater during the first time period.

Power from the power supply may be supplied to the electrical heater according to a first or a second heating profile during the second time period, based on the initial temperature of the electrical heater and based on the determined rate of increase in temperature of the electric heater during the first time period.

The controller may comprise an electrical storage element. The controller may be arranged to communicate with the electrical storage element. The controller may be arranged to write to and read from the electrical storage element parameters or other information pertaining to the control of the aerosol-generating device. The controller may be arranged to store the lastly used heating profile in the electrical storage element. The electrical storage element may be a memory element.

The initial temperature of the electrical heater may be determined by the controller and power from the power supply may be supplied to the electrical heater according to the lastly used heating profile, if the initial temperature of the electrical heater is above a predefined temperature threshold. For this purpose the lastly used heating profile may be stored in the electrical storage element.

The predefined temperature threshold for the initial temperature of the electrical heater may be between about 50 degrees Celsius and about 150 degrees Celsius, between about 60 degrees Celsius and about 120 degrees Celsius or preferably between about 80 degrees Celsius and about 100 degrees Celsius. The predefined temperature threshold for the initial temperature of the electrical heater may be 80 degrees Celsius.

If the initial temperature of the electrical heater is increased, the required time taken for a temperature of the electrical heater to increase the second predetermined temperature during the first time period may be significantly reduced. Thus, in such cases even an aerosol-generating article comprising an aerosol-forming substrate with a rather high water content may be heated very fast and may be erroneously heated with the normal second heating profile.

In order to avoid such situations, the determination of the rate of increase in temperature may be by-passed and the controller may be arranged to supply power from the power supply to the electrical heater according to the lastly used heating profile. Such control strategy is justified, since it may be assumed that the aerosol-generating device has been used most recently and is now to be used for a subsequent second experience. Due to the close temporal relation to the first or previous experience, it is further highly likely that the ambient conditions and also the conditions of the aerosol-forming substrate are identical to those of the previous experience.

In embodiments the aerosol-generating device may comprise a rechargeable power supply capable of providing at least a first experience and a second experience without intermediate recharge between the first and the second experiences. In these embodiments, the controller may be arranged to determine whether the instant experience is a first experience or a second experience. The controller may be further arranged to adjust the supply of power from the power supply to the electrical heater during the second time period based on if it is a first or a second experience.

The controller may be arranged to store in the electrical storage element, whether the current experience is a first experience or a second experience. The controller may be further arranged to store the lastly used heating profile.

If the controller detects that an experience is a second experience, the controller may be arranged to supply power from the power supply to the electrical heater according to the heating profile used in the preceding first experience.

In order to avoid application of a wrong heating profile, a second experience may always be carried out using the heating profile used in the first experience. It will be understood that the risk of such approach is that if a consumable with a higher water content were inserted after a previous experience with a "dry" consumable (using the normal heating profile), then the "wet" consumable will be heated with the normal heating profile, which might cause a hot aerosol effect for the user. However, it may be considered that this is a rather unlikely scenario. Instead usually a consumable used for a second experience following a first experience will likely have the same characteristics of the consumable used in the previous experience: it will most likely come from the same pack of consumables and be subject to the same climatic conditions.

The controller may be further arranged to be reset to first experience after a full recharge of the power supply of the aerosol-generating device. In this way it is ensured that it is considered a first experience, when a fully charged battery is available.

According to an embodiment of the present invention there is provided a computer program that, when executed on a computer or other processing device, carries out the method of the present invention, in accordance with any of the embodiments described herein. The computer program may be implemented as a software product suitable for running on an aerosol-generating device having a programmable controller as well as other required hardware elements, such as an electrical heater and a power supply.

The invention will be further described, by way of example only, with reference to the accompanying drawings in which:
Fig. 1 shows a cross-sectional view of an aerosol-generating device according to an embodiment of the present invention;
Fig. 2 shows a cross-sectional view of an aerosol-generating system comprising the aerosol-generating device of Figure 1; and
Fig. 3 illustrates a method carried out by the controller of the aerosol-generating device of Fig. 1;
Fig. 4 illustrates a further method carried out by the controller of the aerosol-generating device of Fig. 1,
Fig. 5 illustrates test results of required heating times under ISO conditions; and
Fig. 6 illustrates test results of required heating times under TROPICAL conditions.

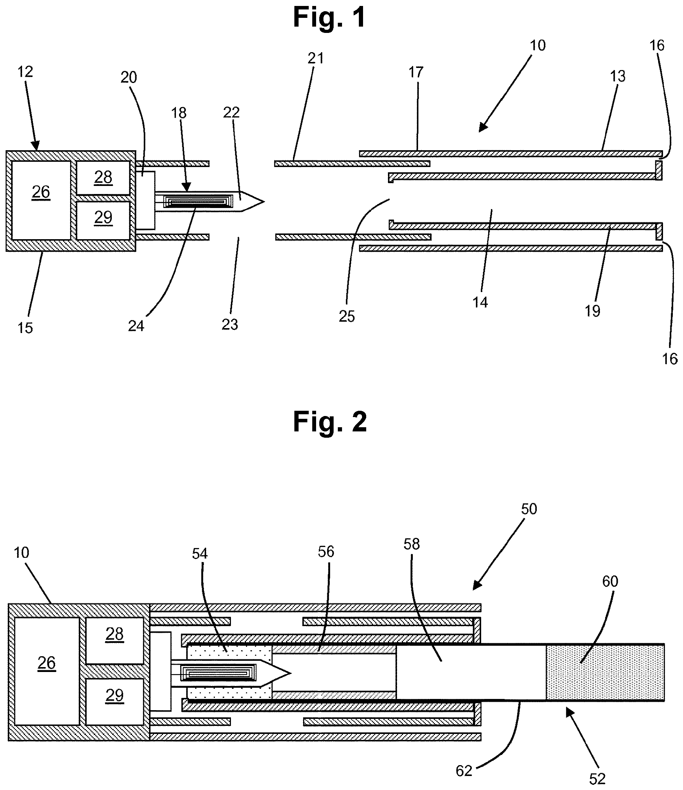

Fig. 1 shows a cross-sectional view of an aerosol-generating device 10 according to an embodiment of the present invention. The aerosol-generating device 10 comprises a generally cylindrical housing 12 comprising a front housing portion 13 and a rear housing portion 15. The front housing portion 13 is slidably removable from the rear housing portion 15 and is illustrated in a partially removed position in Fig. 1.

The front housing portion 13 comprises an outer wall 17 and an inner wall 19, wherein the inner wall 19 defines a cavity 14 for receiving an aerosol-forming substrate. A plurality of air inlets 16 for admitting air into the aerosol-generating device 12 are defined between the outer wall 17 and the inner wall 19 at an end of the front housing portion 13.

The rear housing portion 15 comprises a cylindrical wall 21 that is received between the outer wall 17 and the inner wall 19 of the front housing portion 13 when the front housing portion 13 is received on the rear housing portion 15. The cylindrical wall 21 defines a plurality of elongate slots 23.

The aerosol-generating device 10 also comprises an electrical heater 18 positioned on the rear housing portion 15 and arranged to extend through an aperture 25 defined by the inner wall 19 and into the cavity 14 when the front housing portion 13 is received on the rear housing portion 15. During use, air flows into the aerosol-generating device 10 through the air inlets 16, through the slots 23 defined by the cylindrical wall 21, and through the aperture 25 into the cavity 14.

The electrical heater 18 comprises a base portion 20 and an elongate electrically insulating substrate 22 extending from the base portion 20. The elongate electrically insulating substrate 22 is formed from a ceramic material. The elongate electrically insulating substrate 22 is blade shaped to facilitate insertion of the elongate electrically insulating substrate 22 into an aerosol-forming substrate when the aerosol-forming substrate is received within the cavity 14.

The electrical heater 18 also comprises a plurality of resistive heating elements 24 positioned on the elongate electrically insulating substrate 22.

The aerosol-generating device 10 also comprises a power supply 26, a controller 28 and a temperature sensor 29. The controller 28 may be arranged to perform several functions including controlling the supply of power from the power supply 26 to the resistive heating element 24 of the electrical heater 18. The power supply 26 comprises a rechargeable battery.

Fig. 2 shows a cross-sectional view of an aerosol-generating system 50 comprising the aerosol-generating device 10 of Figure 1 and an aerosol-generating article 52 received within the cavity 14 of the aerosol-generating device 10. The aerosol-generating device 10 is illustrated in Fig. 2 with the front housing portion 13 fully received on the rear housing portion 15.

The aerosol-generating article 52 comprises an aerosol-forming substrate 54 in the form of a tobacco plug, a hollow acetate tube 56, a polymeric filter 58, a mouthpiece 60 and an outer wrapper 62. When the aerosol-generating article 52 is received within the cavity 14 of the aerosol-generating device 10, the elongate electrically insulating substrate 22 and the resistive heating element 24 of the electrical heater 18 are received within the tobacco plug.

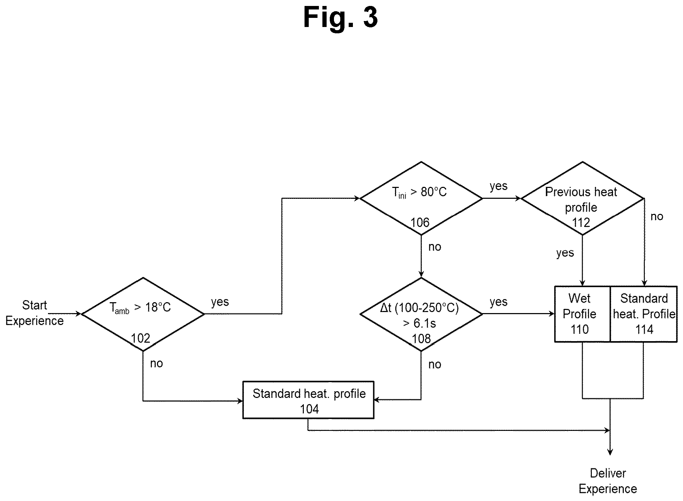

The controller 28 of the aerosol-generating device 10 is arranged to carry out the method 100 illustrated in Figure 3 when the aerosol-generating article 52 is inserted into the cavity 14 and the aerosol-generating device 10 is switched on by a user.

Upon initiation of the device, the experience is started. In a step 102, the controller 28 determines an ambient temperature using the temperature sensor 29. If the ambient temperature is below 18 degree Celsius, electrical power is supplied from the power supply 26 to the electrical heater 24 according to a second heating profile (step 104). The second heating profile corresponds to a standard heating profile that is used for aerosol-generating articles having a normal water content.

If the ambient temperature is above 18 degree Celsius, the controller 28 determines the initial temperature of the electrical heater 24 in step 106. For this purpose, the controller 28 measures the electrical resistance of the electrical heater 24. Based on the measured electrical resistance, the controller 28 determines the initial temperature of the electrical heater 24.

If the initial temperature of the electrical heater is below 80 degrees Celsius, the controller 28 starts a supply of power at a constant rate from the power supply 26 to the electrical heater 18 at step 108.

The controller 28 records the time required for the electrical heater 18 to be heated from a first predefined temperature of 100 degrees Celsius to a second predefined temperature of 250 degrees Celsius. If the time taken to increase the temperature of the electrical heater 18 to 250 degrees Celsius is below 6.1 seconds, the aerosol-forming substrate 54 of the aerosol-generating article 52 is considered to have a normal water content. Accordingly, in this situation the controller is arranged to supply power to the electrical heater according to the normal, second heating profile (step 104).

If the time taken to increase the temperature of the electrical heater 18 to 250 degrees Celsius is above 6.1 seconds, the aerosol-forming substrate 54 of the aerosol-generating article 52 is considered to have an increased water content. Accordingly, in this situation the controller is arranged to supply power to the electrical heater according to a first heating profile (step 110). With the first heating profile less electrical power is delivered to the heater such that the so-called "hot aerosol effect" is avoided or at least reduced.

If in step 106 the initial temperature of the electrical heater is determined to be above 80 degrees Celsius, there is a high likelihood that the required time for the electrical heater to reach the second predefined temperature of 250 degrees Celsius might be considerable shorter. In this case, an aerosol-generating article 52 comprising an aerosol-forming substrate 54 with high water content may be heated rather fast, and may be erroneously heated according to the second heating profile.

In order to avoid such erroneous detection, step 108 is by-passed if the initial temperature of the electrical heater is determined to be above 80 degrees Celsius. In this case, instead the controller is configured to use the same heating profile that was used during the previous experience. For this purpose the controller reads out from an internal memory a stored previously used heating profile (step 112).

If the previously used heating profile was the second heating profile, the current experience is also carried out using the second heating profile (step 114).

If the previously used heating profile was the first heating profile, the current experience is also carried out using the first heating profile (step 110).

The controller is further configured to store in the local memory the heating profile that is used during the present experience.

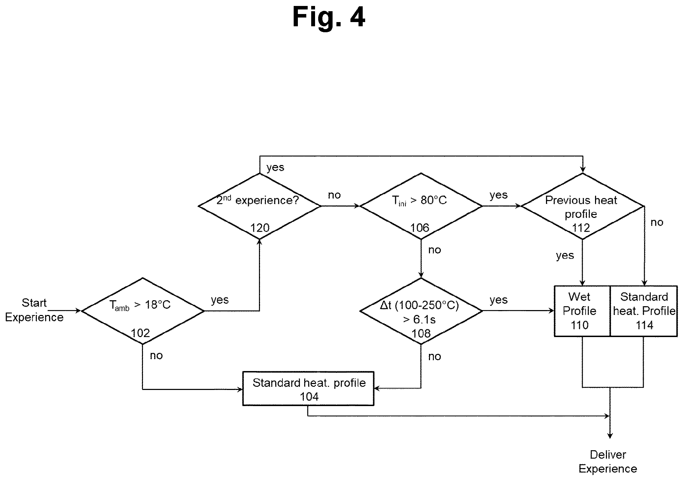

The controller 28 of the aerosol-generating device 10 may also be arranged to carry out the method 100 illustrated in Fig. 4 when the aerosol-generating article 52 is inserted into the cavity 14 and the aerosol-generating device 10 is switched on by a user.

The method illustrate in Fig. 4 is largely similar to the method of Fig. 3 and identical reference numerals are used to denote identical method steps. This method is particularly useful in embodiments, in which the aerosol-generating device comprises a power source that is capable of delivering plural experiences, without the need of an intermediate.

The method of Fig. 4 comprises an additional step 120, in which the controller 28 determines whether the present experience is a first experience or whether it is a second experience.

If in step 120 it is determined that the present experience is a first experience, the method continues with step 106 as described above, and by determining the initial temperature of the electrical heater 24.

If in step 120 it is determined that the present experience is a second experience, the method steps 106 and 108 are by-passed. Instead the controller reads out from the local memory, which heating profile was used in the preceding first experience. It is assumed that any second experience will most likely be carried out using the same aerosol-generating article or at least an aerosol-generating article that was subject to the same environmental and climatic conditions as the aerosol-generating article that was used in the first experience.

Accordingly, if the heating profile used for the first experience was the second heating profile, the current experience is also carried out using the second heating profile (step 114).

If the heating profile used for the first experience was the first heating profile, the current experience is also carried out using the first heating profile (step 110).

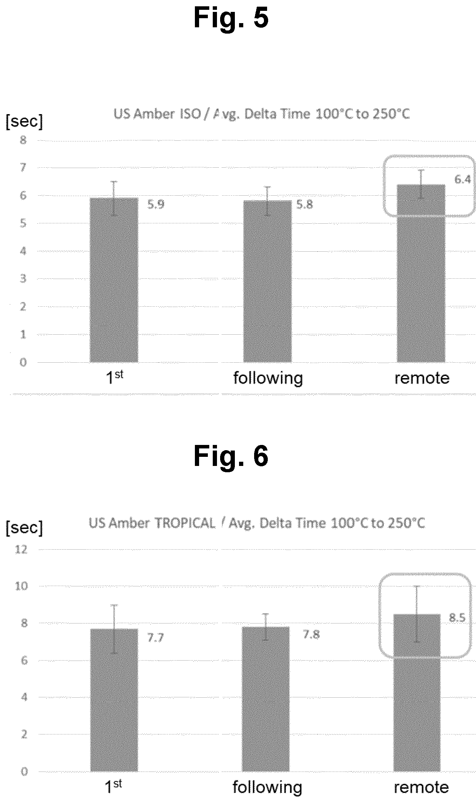

Results of tests carried out to measure the time needed to raise the temperature of the electric heater from 100 degrees Celsius to 250 degrees Celsius are depicted in Fig. 5. These tests were run with an aerosol-generating device as depicted in Fig. 1. The aerosol-generating article was a US amber stick. The experiments were carried out under both standard ISO conditions and TROPICAL conditions. ISO conditions means that a ambient temperature of 22 degrees Celsius and a relative humidity of 60 percent were applied. TROPICAL conditions means that an ambient temperature of 30 degrees Celsius and a relative humidity of 75 to 80 percent were applied.

In the experiments shown in Figs. 5 and 6, two user experiences were carried out without intermediate recharge of the battery of the aerosol-generating device. The first experience is carried out with a fully charged battery. A second experience is carried out subsequently, without intermediate recharge. A second experience carried out within 5 minutes from the first experience is referred to as a "following" experience. A second experience carried out within 15 to 30 minutes from the first experience is referred to as a "remote" experience.

The results illustrated in Fig. 5 show a surprising effect. For both conditions, the required time to heat the electrical heater from 100 degrees Celsius to 250 degrees Celsius is indicated for three different situations under ISO and TROPICAL conditions:
The column labelled "1^{st}" relates to a first experience, which means that a fully charged battery is available. As depicted an average time of 5.9 +/-0.6 seconds was recorded for ISO conditions and an average time of 7.7 +/-1.3 seconds was recorded for TROPICAL conditions.

The column labelled "following" relates to a second experience, which was carried out shortly after the first experience. In more detail, this following experience was triggered after approximately three minutes after the first experience. A similar average time of 5.8 +/-0.5 seconds was recorded for ISO conditions and an average time of 7.8 +/-0.7 seconds was recorded for TROPICAL conditions.

The column labelled "remote" also relates to a second experience. However, this experience was carried out at about 20 minutes after the first experience. In this situation, an increased average time of 6.4 +/-0.5 seconds was recorded for ISO conditions and an increased average time of 8.5 +/-1.5 seconds was recorded for TROPICAL conditions.

Surprisingly, for both conditions (ISO and TROPICAL) the measured time significantly increased for the second experience carried out after 20 minutes. It is suggested that most likely the reason has to be found in the battery chemistry. It seems that with a long waiting time after the first experience the battery is no longer capable of providing a power boost such to raise the temperature from 100 degrees Celsius to 250 degrees Celsius as in a first experience or in a second experience performed shortly after the first experience.

By using the method as described above with Fig. 4 the risk that erroneously a wet heating profile is activated, due to the increase in the required heating time to heat the electrical heater from 100 degrees Celsius to 250 degrees Celsius, is reduced.

## Claims

1. An aerosol-generating device (10) comprising:
a cavity (14) for receiving an aerosol-forming substrate (54);
an electrical heater (18) arranged to heat an aerosol-forming substrate (54) when the aerosol-forming substrate (54) is received within the cavity (14);
a power supply (26); and
a controller (28) arranged to control a supply of power from the power supply (26) to the electrical heater (18) during a first time period and a second time period after the first time period,
wherein the controller (28) is arranged to determine an initial temperature of the electrical heater (18), and to determine a rate of increase in temperature of the electrical heater (18) during the first time period by determining a time taken for a temperature of the electrical heater (18) to increase from a first predetermined temperature to a second predetermined temperature during the first time period, and
wherein the controller (28) is arranged to adjust the supply of power from the power supply (26) to the electrical heater (18) during the second time period based on the initial temperature of the electrical heater (18) and based on the determined rate of increase in temperature of the electric heater (18) during the first time period.

2. An aerosol-generating device (10) according to claim 1, wherein the controller (28) is arranged to supply power from the power supply (26) to the electrical heater (18) according to a first or a second heating profile during the second time period, based on the initial temperature of the electrical heater (18) and based on the determined rate of increase in temperature of the electric heater (18) during the first time period.

3. An aerosol-generating device (10) according to any preceding claim, wherein the controller (28) is arranged to determine the initial temperature of the electrical heater (18) and wherein the controller (28) is further is arranged to supply power from the power supply (26) to the electrical heater (18) according to the lastly used heating profile, if the initial temperature of the electrical heater (18) is above a predefined temperature threshold.

4. An aerosol-generating device (10) according to any of claims 1 to 2, wherein the controller (28) is arranged to determine the initial temperature of the electrical heater (18) and wherein, the controller (28) is arranged to supply power from the power supply (26) to the electrical heater (18) according to a first or a second heating profile during the second time period, based on the determined rate of increase in temperature of the electric heater (18) during the first time period, if the initial temperature of the electrical heater (18) is below the predefined temperature threshold.

5. An aerosol-generating device (10) according to claim 4, wherein the controller (28) is arranged to supply power from the power supply (26) to the electrical heater (18) according to a first heating profile during the second time period when the determined time is above a first threshold.

6. An aerosol-generating device (10) according to claim 4, wherein the controller (28) is arranged to supply power from the power supply (26) to the electrical heater (18) according to a second heating profile during the second time period when the determined time is below the first threshold, wherein with the second heating profile more heating power is delivered to the electrical heater (18) than with the first heating profile.

7. An aerosol-generating device (10) according to any one of claims 4 to 6, wherein the controller (28) is arranged to prevent the supply of power from the power supply (26) to the electrical heater (18) during the second time period when the determined time is below a second threshold, wherein the second threshold is smaller than the first threshold.

8. An aerosol-generating device (10) according to any preceding claim, wherein the controller (28) is arranged to determine an ambient temperature, wherein the controller (28) is arranged to supply power from the power supply (26) to the electrical heater (18) according to a second heating profile when the determined ambient temperature is below the ambient temperature threshold.

9. An aerosol-generating device (10) according to claim 8, further comprising a temperature sensor arranged to sense the ambient temperature, wherein the controller (28) is arranged to determine the ambient temperature based on a signal received from the temperature sensor.

10. An aerosol-generating device (10) according to any preceding claim, wherein the electrical heater (18) comprises a resistive heating element (24), wherein the controller (28) is arranged to determine a temperature of the resistive heating element (24) based on a resistance of the resistive heating element (24).

11. An aerosol-generating system comprising:
an aerosol-generating device (10) according to any preceding claim; and
an aerosol-generating article (52) comprising an aerosol-forming substrate (54).

12. An aerosol-generating system according to claim 11, wherein the aerosol-forming substrate (54) comprises tobacco.

13. A method of controlling an aerosol-generating device (10) having a cavity (14) for receiving an aerosol-forming substrate (54), a power supply (26), and an electrical heater (18) arranged to heat an aerosol-forming substrate (54) when the aerosol-forming substrate (54) is received within the cavity (14), the method comprising the steps of:
controlling a supply of power from the power supply (26) to the electrical heater (18) for a first time period;
determining an initial temperature of the electrical heater (18);
determining a rate of increase in temperature of the electrical heater (18) during the first time period by determining a time taken for a temperature of the electrical heater (18) to increase from a first predetermined temperature to a second predetermined temperature; and
adjusting a supply of power from the power supply (26) to the electrical heater (18) during a second time period after the first time period, wherein the supply of power from the power supply (26) to the electrical heater (18) during the second time period is adjusted based on the determined initial temperature of the electrical heater (18) and based on the determined rate of increase in temperature during the first time period.

14. A method according to claim 13, wherein the step of controlling a supply of power from the power supply (26) to the electrical heater (18) for a first time period comprises supplying power from the power supply (26) to the electrical heater (18) at a constant rate for the first time period.

15. A computer program that, when executed on a computer or other processing device, carries out the method of claim 13 or 14.

## Patentansprüche

1. Aerosolerzeugungsvorrichtung (10), aufweisend:
einen Hohlraum (14) für ein Aufnehmen eines aerosolbildenden Substrats (54);
eine elektrische Heizvorrichtung (18), die für ein Erwärmen eines aerosolbildenden Substrats (54) angeordnet ist, wenn das aerosolbildende Substrat (54) innerhalb des Hohlraums (14) aufgenommen ist;
eine Energieversorgung (26); und
eine Steuerung (28), die angeordnet ist, eine Energieversorgung von der Energieversorgung (26) an die elektrischen Heizvorrichtung (18) während eines ersten Zeitraums und eines zweiten Zeitraums nach dem ersten Zeitraum zu regeln,
wobei die Steuerung (28) angeordnet ist für ein Bestimmen einer Anfangstemperatur der elektrischen Heizvorrichtung (18) und für ein Bestimmen einer Geschwindigkeit des Temperaturanstiegs der elektrischen Heizvorrichtung (18) während des ersten Zeitraums durch Bestimmen einer Zeit, die eine Temperatur der elektrischen Heizvorrichtung (18) benötigt, um von einer ersten vorbestimmten Temperatur auf eine zweite vorbestimmte Temperatur während des ersten Zeitraums anzusteigen, und
wobei die Steuerung (28) angeordnet ist für ein Anpassen der Energieversorgung von der Energieversorgung (26) an die elektrische Heizvorrichtung (18) während des zweiten Zeitraums basierend auf der Anfangstemperatur der elektrischen Heizvorrichtung (18) und basierend auf der bestimmten Geschwindigkeit des Temperaturanstiegs der elektrischen Heizvorrichtung (18) während des ersten Zeitraums.

2. Aerosolerzeugungsvorrichtung (10) nach Anspruch 1, wobei die Steuerung (28) angeordnet ist, die Energieversorgung von der Energieversorgung (26) an die elektrische Heizvorrichtung (18) gemäß einem ersten oder einem zweiten Heizprofil während des zweiten Zeitraums basierend auf der Anfangstemperatur der elektrischen Heizvorrichtung (18) und basierend auf der bestimmten Geschwindigkeit des Temperaturanstiegs der elektrischen Heizvorrichtung (18) während des ersten Zeitraums bereitzustellen.

3. Aerosolerzeugungsvorrichtung (10) nach einem beliebigen vorhergehenden Anspruch, wobei die Steuerung (28) angeordnet ist, die Anfangstemperatur der elektrischen Heizvorrichtung (18) zu bestimmen, und wobei die Steuerung (28) ferner angeordnet ist, die Energieversorgung von der Energieversorgung (26) an die elektrische Heizvorrichtung (18) gemäß dem zuletzt verwendeten Heizprofil bereitzustellen, wenn die Anfangstemperatur der elektrischen Heizvorrichtung (18) über einem vordefinierten Temperaturschwellenwert liegt.

4. Aerosolerzeugungsvorrichtung (10) nach einem der Ansprüche 1 bis 2, wobei die Steuerung (28) angeordnet ist, die Anfangstemperatur der elektrischen Heizvorrichtung (18) zu bestimmen, und wobei die Steuerung (28) angeordnet ist, die Energieversorgung von der Energieversorgung (26) an die elektrische Heizvorrichtung (18) gemäß einem ersten oder einem zweiten Heizprofil während des zweiten Zeitraums basierend auf der bestimmten Geschwindigkeit des Temperaturanstiegs der elektrischen Heizvorrichtung (18) während des ersten Zeitraums bereitzustellen, wenn die Anfangstemperatur der elektrischen Heizvorrichtung (18) unterhalb des vordefinierten Temperaturschwellenwertes liegt.

5. Aerosolerzeugungsvorrichtung (10) nach Anspruch 4, wobei die Steuerung (28) angeordnet ist, die Energieversorgung von der Energieversorgung (26) an die elektrische Heizvorrichtung (18) gemäß einem ersten Heizprofil während des zweiten Zeitraums bereitzustellen, wenn die bestimmte Zeit über einem ersten Schwellenwert liegt.

6. Aerosolerzeugungsvorrichtung (10) nach Anspruch 4, wobei die Steuerung (28) angeordnet ist, die Energieversorgung von der Energieversorgung (26) an die elektrische Heizvorrichtung (18) gemäß einem zweiten Heizprofil während des zweiten Zeitraums bereitzustellen, wenn die bestimmte Zeit unter dem ersten Schwellenwert liegt, wobei mit dem zweiten Heizprofil mehr Heizleistung an die elektrische Heizvorrichtung (18) bereitgestellt wird als mit dem ersten Heizprofil.

7. Aerosolerzeugungsvorrichtung (10) nach einem beliebigen der Ansprüche 4 bis 6, wobei die Steuerung (28) angeordnet ist, die Energieversorgung von der Energieversorgung (26) an die elektrische Heizvorrichtung (18) während des zweiten Zeitraums zu verhindern, wenn die bestimmte Zeit unter einem zweiten Schwellenwert liegt, wobei der zweite Schwellenwert kleiner als der erste Schwellenwert ist.

8. Aerosolerzeugungsvorrichtung (10) nach einem beliebigen vorhergehenden Anspruch, wobei die Steuerung (28) angeordnet ist, eine Umgebungstemperatur zu bestimmen, wobei die Steuerung (28) angeordnet ist, die Energieversorgung von der Energieversorgung (26) an die elektrische Heizvorrichtung (18) gemäß einem zweiten Heizprofil bereitzustellen, wenn die bestimmte Umgebungstemperatur unter dem Umgebungstemperaturschwellenwert liegt.

9. Aerosolerzeugungsvorrichtung (10) nach Anspruch 8, ferner umfassend einen Temperatursensor, der angeordnet ist, die Umgebungstemperatur zu erfassen, wobei die Steuerung (28) angeordnet ist, die Umgebungstemperatur basierend auf einem von dem Temperatursensor empfangenen Signal zu bestimmen.

10. Aerosolerzeugungsvorrichtung (10) nach einem beliebigen vorhergehenden Anspruch, wobei die elektrische Heizvorrichtung (18) ein Widerstandsheizelement (24) umfasst, wobei der Regler (28) für ein Bestimmen einer Temperatur des Widerstandsheizelements (24) basierend auf einem Widerstand des Widerstandsheizelements (24) angeordnet ist.

11. Aerosolerzeugungssystem, aufweisend:
eine Aerosolerzeugungsvorrichtung (10) nach einem beliebigen vorhergehenden Anspruch; und
einen aerosolerzeugenden Artikel (52), der ein aerosolbildendes Substrat (54) aufweist.

12. Aerosolerzeugungssystem nach Anspruch 11, wobei das aerosolbildende Substrat (54) Tabak umfasst.

13. Verfahren für ein Regeln einer Aerosolerzeugungsvorrichtung (10) aufweisend einen Hohlraum (14) für ein Aufnehmen eines aerosolbildenden Substrats (54), eine Energieversorgung (26) und eine für ein Erwärmen eines aerosolbildenden Substrats (54) angeordnete elektrische Heizvorrichtung (18), wenn das aerosolbildende Substrat (54) innerhalb des Hohlraums (14) aufgenommen ist, das Verfahren die folgenden Schritte umfassend:
Regeln der Energieversorgung von der Energieversorgung (26) an die elektrische Heizvorrichtung (18) für einen ersten Zeitraum;
Bestimmen einer Anfangstemperatur der elektrischen Heizvorrichtung (18);
Bestimmen einer Geschwindigkeit des Temperaturanstiegs der elektrischen Heizvorrichtung (18) während des ersten Zeitraums durch Bestimmen einer Zeit, die eine Temperatur der elektrischen Heizvorrichtung (18) benötigt, um von einer ersten vorbestimmten Temperatur auf eine zweite vorbestimmte Temperatur anzusteigen; und
Anpassen einer Energieversorgung von der Energieversorgung (26) an die elektrische Heizvorrichtung (18) während eines zweiten Zeitraums nach dem ersten Zeitraum, wobei die Energieversorgung von der Energieversorgung (26) an die elektrische Heizvorrichtung (18) während des zweiten Zeitraums basierend auf der bestimmten Anfangstemperatur der elektrischen Heizvorrichtung (18) und basierend auf der bestimmten Geschwindigkeit des Temperaturanstiegs während des ersten Zeitraums angepasst wird.

14. Verfahren nach Anspruch 13, wobei der Schritt des Regelns einer Energieversorgung von der Energieversorgung (26) an die elektrische Heizvorrichtung (18) für einen ersten Zeitraum ein Zuführen von Energie von der Energieversorgung (26) an die elektrische Heizvorrichtung (18) mit einer konstanten Geschwindigkeit für den ersten Zeitraum umfasst.

15. Computerprogramm, das, bei Ausführung auf einem Computer oder einer anderen Vorrichtung, das Verfahren nach Anspruch 13 oder 14 durchführt.

## Revendications

1. Dispositif de génération d'aérosol (10) comprenant :
une cavité (14) destinée à recevoir un substrat formant aérosol (54) ;
un dispositif de chauffage électrique (18) agencé pour chauffer un substrat formant aérosol (54) lorsque le substrat formant aérosol (54) est reçu au sein de la cavité (14) ;
une alimentation électrique (26) ; et
un dispositif de commande (28) agencé pour commander une alimentation en puissance de l'alimentation électrique (26) au dispositif de chauffage électrique (18) pendant une première période et une deuxième période après la première période,
dans lequel le dispositif de commande (28) est agencé pour déterminer une température initiale du dispositif de chauffage électrique (18), et pour déterminer une vitesse d'augmentation de température du dispositif de chauffage électrique (18) pendant la première période par détermination d'un temps pris pour qu'une température du dispositif de chauffage électrique (18) augmente d'une première température prédéterminée à une deuxième température prédéterminée, et
dans lequel le dispositif de commande (28) est agencé pour régler une alimentation en puissance de l'alimentation électrique (26) au dispositif de chauffage électrique (18) pendant une deuxième période sur la base de la température initiale du dispositif de chauffage électrique (18) et sur la base de la vitesse d'augmentation de température déterminée du dispositif de chauffage électrique (18) pendant la première période.

2. Dispositif de génération d'aérosol (10) selon la revendication 1, dans lequel le dispositif de commande (28) est agencé pour fournir de la puissance de l'alimentation électrique (26) au dispositif de chauffage électrique (18) selon un premier ou un deuxième profil de chauffage pendant la deuxième période, sur la base de la température initiale du dispositif de chauffage électrique (18) et sur la base de la vitesse d'augmentation de température déterminée du dispositif de chauffage électrique (18) pendant la première période.

3. Dispositif de génération d'aérosol (10) selon l'une quelconque des revendications précédentes, dans lequel le dispositif de commande (28) est agencé pour déterminer la température initiale du dispositif de chauffage électrique (18) et dans lequel le dispositif de commande (28) est en outre agencé pour fournir de la puissance de l'alimentation électrique (26) au dispositif de chauffage électrique (18) selon le profil de chauffage utilisé en dernier, si la température initiale du dispositif de chauffage électrique (18) est au-dessus d'un seuil de température prédéfini.

4. Dispositif de génération d'aérosol (10) selon l'une quelconque des revendications 1 et 2, dans lequel le dispositif de commande (28) est agencé pour déterminer la température initiale du dispositif de chauffage électrique (18) et dans lequel, le dispositif de commande (28) est agencé pour fournir de la puissance de l'alimentation électrique (26) au dispositif de chauffage électrique (18) selon un premier ou un deuxième profil de chauffage pendant la deuxième période, sur la base de la vitesse d'augmentation de température déterminée du dispositif de chauffage électrique (18) pendant la première période, si la température initiale du dispositif de chauffage électrique (18) est au-dessous du seuil de température prédéfini.

5. Dispositif de génération d'aérosol (10) selon la revendication 4, dans lequel le dispositif de commande (28) est agencé pour fournir de la puissance de l'alimentation électrique (26) au dispositif de chauffage électrique (18) selon un premier profil de chauffage pendant la deuxième période lorsque le temps déterminé est au-dessus d'un premier seuil.

6. Dispositif de génération d'aérosol (10) selon la revendication 4, dans lequel le dispositif de commande (28) est agencé pour fournir de la puissance de l'alimentation électrique (26) au dispositif de chauffage électrique (18) selon un deuxième profil de chauffage pendant la deuxième période lorsque le temps déterminé est au-dessous du premier seuil, dans lequel avec le deuxième profil de chauffage, il est fourni plus de puissance au dispositif de chauffage électrique (18) qu'avec le premier profil de chauffage.

7. Dispositif de génération d'aérosol (10) selon l'une quelconque des revendications 4 à 6, dans lequel le dispositif de commande (28) est agencé pour empêcher l'alimentation en puissance de l'alimentation électrique (26) au dispositif de chauffage électrique (18) pendant la deuxième période lorsque le temps déterminé est au-dessous d'un deuxième seuil, dans lequel le deuxième seuil est inférieur au premier seuil.

8. Dispositif de génération d'aérosol (10) selon l'une quelconque des revendications précédentes, dans lequel le dispositif de commande (28) est agencé pour déterminer une température ambiante, dans lequel le dispositif de commande (28) est agencé pour fournir de la puissance de l'alimentation électrique (26) au dispositif de chauffage électrique (18) selon un deuxième profil de chauffage lorsque la température ambiante déterminée est au-dessous du seuil de température ambiante.

9. Dispositif de génération d'aérosol (10) selon la revendication 8, comprenant en outre un capteur de température agencé pour détecter la température ambiante, dans lequel le dispositif de commande (28) est agencé pour déterminer la température ambiante sur la base d'un signal reçu à partir du capteur de température.

10. Dispositif de génération d'aérosol (10) selon l'une quelconque des revendications précédentes, dans lequel le dispositif de chauffage électrique (18) comprend un élément de chauffage résistif (24), dans lequel le dispositif de commande (28) est disposé pour déterminer une température de l'élément de chauffage résistif (24) sur la base d'une résistance de l'élément de chauffage résistif (24).

11. Système de génération d'aérosol comprenant :
un dispositif de génération d'aérosol (10) selon l'une quelconque des revendications précédentes ; et
un article de génération d'aérosol (52) comprenant un substrat formant aérosol (54).

12. Système de génération d'aérosol selon la revendication 11, dans lequel le substrat formant aérosol (54) comprend du tabac.

13. Procédé de commande d'un dispositif de génération d'aérosol (10) ayant une cavité (14) destinée à recevoir un substrat formant aérosol (54), une alimentation électrique (26), et un dispositif de chauffage électrique (18) disposé pour chauffer un substrat formant aérosol (54) lorsque le substrat formant aérosol (54) est reçu au sein de la cavité (14), le procédé comprenant les étapes consistant à :
commander une alimentation en puissance de l'alimentation électrique (26) au dispositif de chauffage électrique (18) pendant une première période ;
déterminer une température initiale du chauffage électrique (18) ;
déterminer une vitesse d'augmentation de température du dispositif de chauffage électrique (18) pendant la première période par détermination d'un temps pris pour qu'une température du dispositif de chauffage électrique (18) augmente d'une première température prédéterminée à une deuxième température prédéterminée ; et
régler une alimentation en puissance de l'alimentation électrique (26) au dispositif de chauffage électrique (18) pendant une deuxième période après la première période, dans lequel l'alimentation en puissance de l'alimentation électrique (26) au dispositif de chauffage électrique (18) pendant la deuxième période est réglée sur la base de la température initiale déterminée du dispositif de chauffage électrique (18) et sur la base de la vitesse d'augmentation de température déterminée pendant la première période.

14. Procédé selon la revendication 13, dans lequel l'étape consistant à commander une alimentation en puissance de l'alimentation électrique (26) au dispositif de chauffage électrique (18) pendant une première période comprend la fourniture de puissance de l'alimentation électrique (26) au dispositif de chauffage électrique (18) à une vitesse constante pendant la première période.

15. Programme informatique, qui, lorsqu'il est exécuté sur un ordinateur ou un autre dispositif de traitement, effectue le procédé de la revendication 13 ou 14.
